# EUROPEAN PATENT SPECIFICATION

(11) **EP 4 121 340 B1**
(45) Date of publication and mention of the grant of the patent: **20.05.2026**
(21) Application number: 21700598.2
(22) Date of filing: 19.01.2021
(51) Int. Cl.: B62J 43/28, B62K 19/34, B62M 6/55

(54) **ELECTRIC BICYCLE**
ELEKTROFAHRRAD
BICYCLETTE ÉLECTRIQUE

(30) Priority: 19.03.2020 CH 3322020
(43) Date of publication of application: 25.01.2023
(73) Proprietor: SCOTT Sports SA, 1762 Givisiez (CH)
(72) Inventor: MONTAVON, Yann, 1544 Gletterens (CH); RUL, Frédéric, 1647 Corbières (CH); VALLS, Victor, 1700 Fribourg (CH)
(74) Representative: Keller Schneider Patent- und Markenanwälte AG
(86) International application number: PCT/EP2021/051018
(87) International publication number: WO 2021/185487

(56) References cited:
- EP-A1- 2 409 908
- EP-A1- 3 620 362
- DE-U1- 202019 106 361

## Description

### Technical Field

The invention relates to an electric bicycle with a central motor, the bicycle having a frame comprising a down tube, a seat tube and a frame section linking the down tube and the seat tube, the frame featuring an opening delimited inter alia by the down tube, the seat tube and the frame section, and further comprising a drive unit including the motor and a bottom bracket for accommodating a crank, wherein the drive unit is accommodated in the opening of the frame, adjacent to the frame section. The invention further relates to a method for assembling an electric bicycle with a central motor.

### Background Art

The drive unit of an electric bicycle may be arranged at different positions. The most common arrangements include the rear hub motor, the front hub motor and the central motor. The drive unit of central (or "mid-drive") motor electrical bikes is arranged in the vicinity of the bottom bracket, where the crankset of the bicycle is accommodated. The drive unit usually comprises the motor itself and a transmission to the crankset and possibly further components. Central motors have several advantages, including a favorable weight distribution and being able to use the bicycle's gearing, including multiple gears if available.

Most commonly, the drive unit of a central motor electric bicycle is arranged below the supporting structure of the frame. However, due to the fact that the space below a usual bicycle frame is very limited in the bottom bracket region, the shape of the frame has to be substantially changed, usually leading to a decreased rigidity compared to the usual shape of bicycle frames. This usually means that the cross-section of the frame needs to be reinforced in this area.

An example is shown in EP 3 590 813 A1 (Winora-Staiger GmbH), where the drive unit is accommodated below a frame section connecting the down tube and the seat tube. The down tube accommodates the drive battery and is provided by an insertion opening at its rear end, allowing to insert and remove the drive battery along a straight path after removal of a cover forming a protection element for the frame.

Alternatives to the accommodation below the frame have been proposed. US 9,616,966 B2 (Specialized Bicycle Components, Inc.) discloses an electric bicycle comprising a motor mounted to a motor mount of the bicycle frame. The motor mount includes a down tube mount coupled to a down tube, a chainstay mount coupled to a chainstay, and a side brace secured to the down tube mount and wrapping around one side of the motor to the chainstay mount. A side of the motor mount opposite the side brace includes an opening sized to receive the motor in a lateral direction relative to the central plane of the bicycle. The drive battery is accommodated within a tube recess in the down tube. For attaching the battery it is first engaged with a lower frame mount, then pivoted upwardly to a fully attached position, where it may be affixed to an upper frame mount using a mounting pin. However, the lateral mount of the drive unit leads to an asymmetric frame construction and therefore to unfavourable mechanical characteristics of the structure. The attachment of the battery is rather awkward and leads to a non-unitary appearance of the down tube. Furthermore, the profile of the down tube with the recess requires an increased thickness of the tube wall to achieve the required rigidity.

EP 2 409 908 A1 (Winora-Staiger GmbH) describes an electric bicycle having a drive unit that is arranged above a frame element extending in a driving direction and being connected to a lower end of the down tube at its front end to a lower end of the saddle tube at its rear end.

The drive battery of the electric bicycle may be accommodated in a housing mounted to the down tube. However, this is not the most aesthetically pleasing configuration and impedes the mounting of accessories such as drinking bottles or bags.

Document DE202019106361U, which discloses all the features of the preamble of independent claim 1, is another known electric bicycle.

### Summary of the invention

It is the object of the invention to create an electric bicycle pertaining to the technical field initially mentioned, that has a frame geometry with improved rigidity and allows for an aesthetically pleasing accommodation of the drive battery.

The solution of the invention is specified by the features of claim 1. According to the invention, the drive battery is accommodated in the down tube and the down tube comprises an access opening at an end of the down tube, arranged in such a way that the drive battery is removable from the down tube along a straight removal path of the battery.

The accommodation of the drive unit in the opening of the frame, above and adjacent to the frame section, and the accommodation of the drive battery in the down tube with the described access, allow for a geometry of the frame providing high rigidity with comparably slim profiles and wall thicknesses of the frame elements. Furthermore, the aesthetics of the frame are improved.

As is generally known, in addition to the down tube, the seat tube and the frame section, the frame includes further elements such as a top tube and a head tube and possible chain and/or seat stays. Generally, the invention is applicable to a large variety of bicycle frames. As described in more detail below, the top tube and the seat tube may be combined and embodied e. g. as an angled top tube. As is also generally known, the electric bicycle comprises further components such as wheels, a chain (or other means) for transmission of the driving force to the rear wheel, pedals, a handlebar, brakes etc.

The frame section is structurally connected to the down tube and the seat tube, preferably, but not necessarily, to the rear end section of the down tube and the low end section of the seat tube. Preferably, the down tube, the frame section, the seat tube and the further components of the frame form a closed frame.

In a first group of embodiments of the invention, the frame section is an element separate from the drive unit, and the mechanical rigidity of the frame in this region is exclusively provided by the frame section (possibly assisted by struts as described below). In a second group of embodiments, the frame section is an integral part of the drive unit, i.e. the drive unit closes the frame and is a load-bearing stressed member of the frame. In a third group of embodiments, the frame section as well as the drive unit have a structural function (i. e. are load-bearing members), and the rigidity is provided by both these elements.

In particular, the drive battery fills out a substantial part of the down tube, and the drive battery has an elongated shape matching the geometry of the down tube. Compared to other solutions (e. g. laterally or with a swiveling movement), the removal path at an end of the down tube (i. e. the front or the rear end) allows for an optimized use of the available volume within the down tube.

When assembling the electric bicycle according to the invention, the following steps may be carried out:
a) introducing a drive unit including the motor and a bottom bracket for accommodating a crank in an opening of a frame comprising a down tube, a seat tube and a frame section linking the down tube and the seat tube;
b) moving the drive unit in an end position, toward the frame section;
c) mounting the drive unit to the frame;
d) introducing a drive battery into the down tube, through an access opening at an end of the down tube, along a straight path.

It is not required that the drive battery is introduced after mounting the drive unit, but step d) may be carried out independently from steps a) - c), in particular before step a).

The inventive arrangement of the drive unit and the inventive method simplify the assembly of the electric bicycle. In particular, it is not required to turn the bicycle upside down in order to introduce and mount the drive unit. Furthermore, as discussed in more detail below, further components such as cables may be introduced or routed first and the drive unit is mounted in the last stage.

Preferably, the access opening is arranged at a rear end of the down tube, the straight removal path of the battery running below the frame section linking the down tube and the seat tube. Compared to an alternative arrangement of the access opening at a front end of the down tube, as it is described e. g. in EP 3 281 855 A1 (BHBIKES Europe, S. L.), the geometry of the head tube and the adjacent sections of the down and the top tube, respectively, does not have to be altered. Accordingly, the structure is not weakened in this area of the frame. Furthermore, if the drive unit is arranged above the frame as in the context of the present invention, there is usually a higher flexibility for the geometry in the region of the bottom bracket than for the geometry in the region of the head tube. In addition, using elongated batteries with a simple shape (e. g. prismatic with end surfaces perpendicular to the main axis) the space inside the down tube may be utilized better with a rear opening than with a front (or top) opening.

According to the invention, the frame section includes a U-shaped profile (as seen in a plane perpendicular to the main extension of the frame section), a base of the profile being on a far side of the drive unit, i. e. the profile is closed to the bottom. Therefore, the frame section protects the inside of the frame as well as the drive unit from negative impacts from the environment, such as by stone chips or contact with the ground. In addition, the two legs of the U-shaped profile may provide an accommodation space in between for parts of the drive unit or further elements, such as cables.

According to the invention, the frame section comprises lateral skirts extending from a connection of the frame section with the down tube to a rear part of the frame section and a base plate extending from an inner surface of the connection of the frame section with the down tube to an outer surface of the frame section in a central part of the frame section. The terms "inner" and "outer" relate to the aperture of the frame, i. e. the inner surface is facing the aperture, whereas the outer surface faces away from the aperture.

In particular, the base plate extends substantially perpendicular to the main plane and the lateral skirts. The base plate does not need to be planar but may be curved in one or two directions.

The lateral skirts extend substantially parallel to the main plane of the bicycle. In particular, a first skirt is arranged on a first side, in a lateral distance to the main plane, and a second skirt is arranged on a second side, opposite the first side, in a lateral distance to the main plane. Preferably, the arrangement of the skirts is symmetric with respect to the main plane. The skirts extend to the rear part of the frame section but not necessarily to the rear end of the frame section.

The skirts and the base plate provide mechanical stability to the frame section. Due to the geometry of the base plate, the skirts form a lower, basically U-shaped accommodation space (in a front region as well as in a central region of the skirts) as well as a higher, basically U-shaped accommodation space (in the central region as well as in a back region of the skirts). Preferably, the access opening and the removal path are delimited by the lateral skirts and the base plate, i. e. the lower accommodation space. The upper accommodation space may house a part of the drive unit or further elements, such as cables.

In a preferred embodiment, a cross-section of the frame section in a main plane of the bicycle frame (i. e. a plane that is spanned by the main components of the frame and that corresponds to the main symmetry plane of the bicycle) is U-shaped, the drive unit being accommodated between legs and a base of the frame section. Due to the U-shape, the drive unit may fill out appropriately a bottom region of the frame aperture, which allows for an easy attachment of the drive unit to the frame and for an aesthetically pleasing appearance of the frame - drive unit assembly.

Furthermore, the U-shaped frame section having a convex shape and no turning points means that the mechanical stress on the frame section is considerably reduced compared to usual solutions where the drive unit is mounted below the frame, typically meaning that the shape of the frame is W-shaped coming from the down tube and going to the seat tube.

Preferably, the frame section is connected to the down tube by a circumferential weld. This ensures a reliable mechanical connection between the down tube, the frame section and the seat tube. Alternatively, the frame section may be unitary with the down tube and/or the seat tube or it may be connected to the other frame components by other means such as rivets or screws. A screw connection is advantageous insofar as the frame section may be removed, repaired and replaced with ease if the need arises. However, measures have to be taken to ensure that the screw connection does not become loose due to use of the bicycle.

The frame section may be constituted by two halves that are basically symmetrical about the central main plane of the bicycle, e. g. from pressed or forged metal, being joined by a full perimetral weld or spot weld.

Preferably, the frame section is mechanically supporting the drive unit. It is not required that the drive unit is exclusively supported by the frame section, but the drive unit may be supported by the frame section as well as by further elements (e. g. the seat tube and/or the down tube).

Alternatively, the drive unit is supported exclusively by other elements such as the seat tube and/or down tube. In further embodiments, the drive unit contributes to the mechanical stability of the frame, i. e. is a load-bearing stressed member.

In a preferred embodiment, the drive unit is mounted to the frame using a plurality of connections, at least one of them comprising a mounting bracket featuring an L-shaped section, wherein a first connection site for affixing the bracket to the drive unit is arranged in a first leg of the L-shaped section and wherein a second connection site for affixing the bracket to the frame is arranged in a second leg of the L-shaped section.

Mounting brackets with an L-shaped section comprise U-shaped brackets ("double L"), which may provide four (or more) connection sites (e. g. screw holes).

In particular, an angle between the two legs of the L-shaped section is at least 60°, in particular at least 80°.

The use of such mounting brackets allows for the reliable attachment of commercially available drive units. For that purpose, the connection geometry of such drive units is taken into account when devising the geometry of the mounting brackets. Furthermore the L-shaped section of the mounting bracket allows for an optimum fixation of the bracket to the drive unit on one hand and for an optimum fixation of the bracket to the frame on the other hand, as described in more detail below.

Preferably, the at least one mounting bracket is affixed to the frame with a first leg of the L-shaped section before moving the drive unit in its end position, and the mounting bracket is affixed to the drive unit with a second leg of the L-shaped section after moving the drive unit in its end position.

Preferably, the first leg of the L-shaped section runs substantially parallel to a main plane of the bicycle frame and the second leg of the L-shaped section runs substantially parallel to the main plane of the bicycle frame. This allows for a reliable connection to both the frame as well as the drive unit.

In a preferred variant, screw connections are used for connecting the mounting bracket(s) to the bicycle frame and the drive unit. In this case, a first screw or group of screws for connecting the bracket(s) to the drive unit will be oriented in a direction perpendicular to the main plane of the bicycle and a second screw or group of screws for connecting the bracket(s) to the frame will be oriented parallel to the main plane of the bicycle.

In embodiments featuring lateral skirts and a base plate as described above, the second leg of the L-shaped section is preferably affixed to the base plate. This affords a simple and reliable attachment and support of the drive unit by the frame section.

Instead of using mounting brackets, the drive unit may be mounted to the frame using other means. In particular, the drive unit may comprise suitable elements for directly mounting the drive unit to the frame. Such suitable elements include flanges featuring screw passages that allow the mounting of the drive unit using screws passing the screw passages and interacting with suitably arranged screw holes in the adjacent frame components (in particular the down tube, the frame section and/or the seat tube). Instead of screws or in addition thereto, rivets may be employed. Furthermore, the drive unit may be more permanently affixed to the frame, e. g. by welding or gluing or by using conical friction joints.

Preferably, a ratio between a vertical extension of the drive unit and a horizontal extension of the drive unit in the main plane of the bicycle is at least 1.2. The horizontal extension is measured parallel to the floor contact plane, which is defined by the frame, the wheels and possibly by further components of the bicycle. It corresponds to a horizontal plane for the standing bicycle, with released shock absorbers. The vertical extension is perpendicular thereto.

Compared to most of the present solutions, where the ratio is at about 1.0, at a given volume, the extension in the horizontal direction is decreased at the expense of an increased vertical extension. This may be achieved by suitably rotating a drive unit having an elongated shape or by choosing an appropriate geometry for the drive unit.

This allows for mounting the drive unit in the aperture of a compact frame, where the distance between the down tube and the seat tube and/or the respective angle is rather small. The frame geometry is affected much less compared to many solutions where the drive unit is accommodated below the frame.

Preferably, cables running from a front part of the bicycle to a back part of the bicycle are arranged between the frame section and the drive unit. Due to the geometry of the frame section and the adjacent tubes, the cables may be easily routed, without excessive curvatures. It is not necessary to route the cables in between fixation points or on small inaccessible areas and interference with the drive unit may be easily avoided, e. g. by appropriately designing the connections.

The cables may be affixed, in particular to the frame section, by any suitable means such as adhesive bands or cable holders that are glued, brazed or welded to the frame section.

Accordingly, when assembling the electric bicycle, the cables running from the front part to the back part are arranged on a side of the frame section facing the opening of the frame before moving the drive unit in its end position. This step may happen before or after introducing the drive unit in the opening of the frame.

In some embodiments of the invention, at least one strut extends from the down tube to the seat tube and/or a top tube of the frame.

Such a strut or a plurality of struts greatly increase the rigidity of the frame, even when their cross-section is comparably small.

In some of these embodiments, the at least one strut extends offset a central main plane of the bicycle and the drive unit is arranged laterally inside with respect to the at least one strut. Two struts arranged symmetrically with respect to the central plane may link the down tube to the seat tube and/or a top tube, such that the drive unit is accommodated in between the two struts.

In other embodiments, the at least one strut extends in the central main plane and is arranged above the drive unit.

Even further embodiments can do without struts, e. g. because the frame's rigidity is sufficient without or because the drive unit is connected to the down tube as well as to the seat tube and/or the top tube and has a certain load-bearing function.

In a preferred embodiment, a top tube of the frame comprises two angled portions, a rear portion constituting the seat tube of the frame, wherein an additional saddle tube is mounted to the rear portion, extending away from the frame aperture. This allows for constructing a very compact and rigid frame. The freedom in designing the frame's geometry is enhanced.

In such an embodiment, an angle between a main extension of the rear portion and a main extension of the down tube is preferably less than 20°, in particular less than 10°.

This allows for a stable mounting of the drive unit, in particular if the frame aperture basically matches the outer geometry of the drive unit in the accommodation region.

Other advantageous embodiments and combinations of features come out from the detailed description below and the entirety of the claims.

### Brief description of the drawings

The drawings used to explain the embodiments show:
- Fig. 1: an oblique view of a frame for an electric bicycle according to an embodiment of the invention;
- Fig. 2: a side view of the frame;
- Fig. 3: a partial cross-sectional side view of the frame;
- Fig. 4: a detailed oblique view of the drive unit and the frame section connecting the down tube and the top tube;
- Fig. 5: the view of Figure 4, where some of the elements are shown transparently;
- Fig. 6: a side view of a frame according to a second embodiment; and
- Fig. 7: a side view of a frame according to a third embodiment.

In the figures, the same components are given the same reference symbols.

### Preferred embodiments

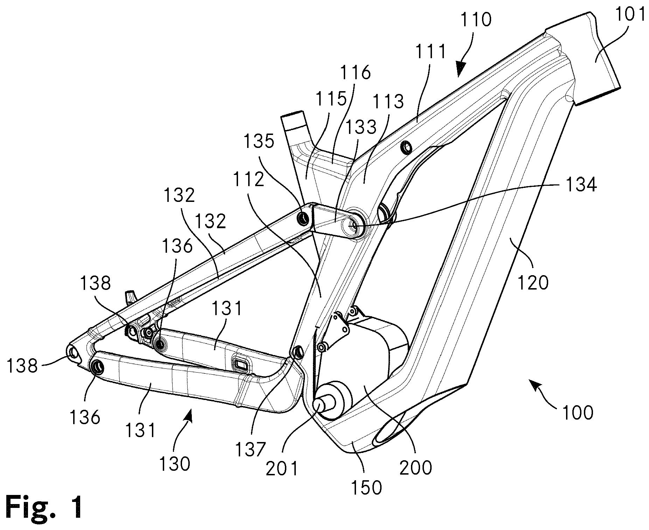

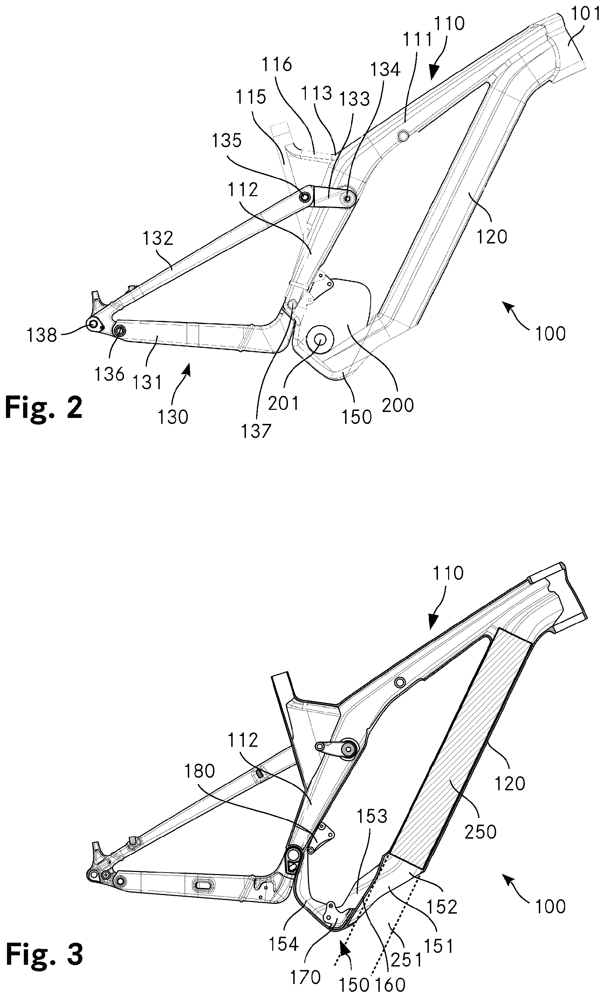

The Figure 1 is an oblique view of a frame for an electric bicycle according to an embodiment of the invention. The Figure 2 is a side view thereof. The frame 100 comprises a head tube 101 for receiving a front wheel fork, the head tube 101 being connected to a top tube 110 and a down tube 120. The top tube 110 has a front part 111 and a rear part 112 connected to the front part 111 by a bend 113. An angle between the front part 111 and the rear part 112 is about 30°. The rear part 112 of the top tube 110 is connected to a rear end of a frame section 150, the front end of which connected to the rear end of the down tube 120. An angle enclosed by the front part 111 of the top tube 110 and the down tube 120 is about 30°, a further angle between the down tube 120 and the front part of the frame section 150 is about 30° as well. The down tube 120 and the rear part 112 of the top tube 110 are approximately parallel to each other.

The frame further comprises a swing arm assembly 130 for supporting the rear wheel axle bearing 138. The swing arm assembly 130 features two lower swing arms 131 and two upper swing arms 132 connected to the upper swing arms 131 by pivots 136, wherein the rear wheel axle bearing 138 is arranged at a rear end of the upper swing arms 132. Further pivots 137 are arranged between the lower swing arms 131 and a lower end region of the rear part 112 of the top tube 110. The front ends of the upper swing arms 132 are each connected to a link 133, wherein the front ends of the links 133 are fixed to a transmission axle 134 supported in the rear part 112 of the top tube 110, slightly below the bend 113. The suspension further comprises a spring/damper element housed within the rear part 112 of the top tube 110. The specifics of such a spring/damper arrangement and its interaction with the swing arm assembly are described in the International Patent Application WO 2015/051472 A1 (Flow AG).

A saddle tube 115 is attached to an outside of a middle section of the rear part 112 of the top tube 110, a support 116 linking the saddle tube 115 to the bend 113 of the top tube 110. The saddle tube 115 is designed to receive a seat post supporting a saddle of the bicycle.

A drive unit 200 comprising an elongated housing accommodating a motor, a motor control unit, a crank axle 201 for mounting a crankset and a transmission from the motor to the crank axle 201, is accommodated in an aperture located between the top tube 110, the down tube 120 and the frame section 150. Such drive units are commercially available, and the invention may applied to several of such drive units. Therefore, it is not necessary to describe the drive unit in more detail.

The Figure 3 is a partial cross-sectional side view of the frame, without the drive unit. In addition to the components seen in Figures 1 and 2, the battery 250, accommodated within the down tube 120 is displayed. The battery 250 has an elongated prismatic housing, the outer shape matching the geometry of the accommodation in the down tube 120.

The frame section 150 linking the rear end of the down tube 120 to the lower end of the top tube 110 comprises two lateral skirts 151 extending along the entire frame section 150 as well as a base plate 160, as well extending along the entire frame section 150. The skirts 151 and the base plate 160 are U-shaped in the main plane of the frame shown in Figures 1, 2. At its front end, the base plate 160 is connected to an inner side of the down tube 120 (i. e. facing the frame aperture). Starting from there, it runs to the outside of the frame (i. e. to the side facing away from the frame aperture), reaching the outside close to the lowest point of the frame and further running along the outside of the frame until the top tube 110 is reached. At a front region 152 of the frame section 150, the two skirts 151 are situated below the base plate 160, delimiting an insertion and removal path 251 for the battery 250, together with the outer surface of the base plate 160. In a central region 153 of the frame section 150 the skirts 151 extend to both sides of the base plate 160, and in a rear region 154 of the frame section 150 the skirts 151 are situated above the base plate 160 forming an accommodation for the drive unit 200, together with the inside surface of the base plate 160 (cf. Figures 1, 2).

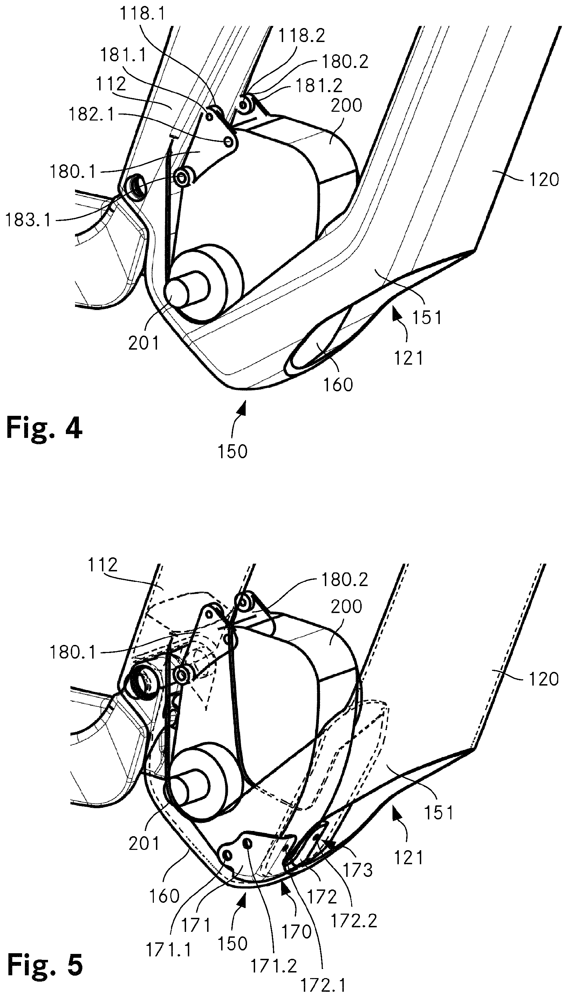

A first mounting bracket 170 is attached to the inner surface of the base plate 160 in a location close to the lowest point of the frame section 150. Two second mounting brackets 180 are attached to the rear part 112 of the top tube 110 (cf. below, Figures 4, 5).

The Figure 4 is a detailed oblique view of the drive unit and the frame section connecting the down tube and the top tube. The view of the Figure 5 is the view of Figure 4, where some of the elements are shown transparently.

The drive unit 200 is accommodated between the rear part 112 of the top tube, the frame section 150 and the down tube 120. The crank axle 201 is located in a lower region of the drive unit 200. The drive unit 200 is held between the lateral skirts 151 of the frame section 150 and supported by the base plate 160. It is further attached to the rear part 112 of the top tube by means of two mounting brackets 180.1, 180.2, arranged symmetrically with respect to the main plane of the frame. The mounting brackets 180.1, 180.2 are generally planar and have a triangular shape. Through holes 181.1, 182.1, 183.1; 181.2 are located in every corner of the mounting brackets 180.1, 180.2.

A pair of first screws running through a first pair of the through holes 181.1, 181.2 attach the mounting brackets 180.1, 180.2 to eyelets 118.1, 118.2 welded to the rear part 112 of the top tube. Pairs of second and third screws running through the further through holes 182.1, 183.1 attach the mounting brackets 180.1, 180.2 to the drive unit 200, featuring screw holes at respective locations. All screws run essentially perpendicular to the main plane of the frame.

The down tube 120 features an opening 121 at its rear end. When the battery is removed or fully inserted it may be closed by a suitable cover in a manner known as such, to protect the inside of the down tube 120 and the battery against negative impact from dirt, moisture, etc. Similarly, the battery will be held in place by the cover or further locking means.

The further attachment of the drive unit 200 to the base plate 160 of the frame section 150 is described in connection with Figure 4, where in particular the skirts 151 and the base plate 160 of the frame section 150 are shown transparently.

A U-shaped mounting bracket 170 is arranged between the housing of the drive unit 200 and the base plate 160. The mounting bracket 170 features a first leg 171, a base 172 and a second leg 173, connected to each other by rounded edges, wherein angles between the two legs 171, 173 and the base 172 amount to about 90°. Furthermore, the two legs 171, 173 and the base 172 are all connected by a connection piece. The geometry of the U-shaped bracket mounting 170 matches the geometry of the base plate 160 and the skirts 151 in the mounting region.

Two through holes 171.1, 171.2 are provided in the first leg 171, two threaded screw holes 172.1, 172.2 are provided in the base 172 and two further through holes are provided in the second leg 173. The mounting bracket 170 is affixed to the drive unit 200 by four screws running through the through holes 171.1, 171.2 in the first leg 171 and second leg 173, respectively, cooperating with screw holes of the drive unit located appropriately. These screws run essentially perpendicular to the main plane of the frame. Furthermore, the mounting bracket 170 is affixed to the base plate 160 of the frame section 150 by two further screws running through two appropriately placed through holes in the base plate 160 and screwed into the screw holes 172.1, 172.2 in the base of the mounting bracket 170. These further screws run parallel to the main plane of the frame.

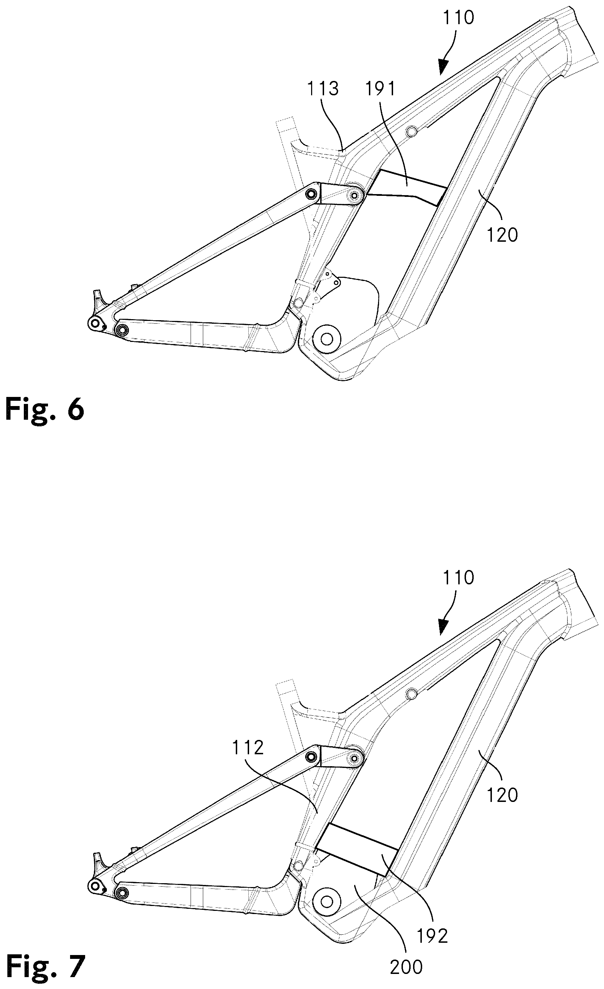

The Figure 6 is a side view of a frame according to a second embodiment. In most aspects, it corresponds to the first embodiment described in connection with Figures 1 - 4. Nevertheless, a central strut 191 is attached to both the top tube 110, in the region of the bend 113, and the down tube 120. The central strut 191 runs in the main plane of the frame, substantially perpendicular to the main extension of the down tube 120. It has a basically planar shape. The width of the central strut 191 slightly decreases from the attachment site to the top tube 110 to a central location of the strut. From there, the width of the further section running to the down tube 120 remains substantially constant.

The Figure 7 is a side view of a frame according to a third embodiment. In most aspects, it corresponds to the first embodiment described in connection with Figures 1 - 4. Nevertheless, two lateral struts 192 are attached to both the rear part 112 of the top tube and the down tube 120. The lateral struts 192 run parallel but offset to the main plane of the frame, such that an upper portion of the drive unit 200 may be accommodated in between the two lateral struts 192. The orientation of the main extension of the lateral struts 192 is substantially perpendicular to the main extension of the down tube 120 and the rear part 112 of the top tube 110. Both lateral struts 192 have a basically planar shape and a constant width.

The drive unit 200 may be mounted to the frame 100 as described in the following. First of all, the frame is provided in an upright orientation. Cables running from the front area of the frame to the back are routed in the frame section 150, in particular on the base plate 160. Ducts may be provided to lead cables from the inside of the down tube 120 to the inner side of the base plate 160. Furthermore, channels, cable holders, adhesive surfaces etc. may be provided to affix the cables.

After routing the cables, the drive unit 200 is introduced in the aperture of the frame 100, wherein the U-shaped mounting bracket 170 is already attached to the drive unit 200. The drive unit 200 is then lowered until it is accommodated in the frame section 150 as well as between the rear part 112 of the top tube 110 and the down tube 120. Now, the drive unit may be affixed using the mounting bracket 170 as well as the mounting brackets 180.1, 180.2. This may be done easily as the eyelets 118.1, 118.2 for affixing the mounting brackets 180.1, 180.2 are directly accessible and the screws for affixing the U-shaped mounting bracket 170 may be introduced from below, through the base plate 160.

The invention is not restricted to the embodiments described above. In particular, the invention is applicable to electric bicycles having different frame geometries and rear wheel suspension arrangements. The specific geometry of the frame section and the housing of the drive battery may be embodied differently. Furthermore, struts for increasing the rigidity of the frame do not need to be arranged symmetrically as in the second and third embodiment, but may be arranged asymmetrically, e. g. one strut running in a plane offset the main plane.

In summary, it is to be noted that the invention creates an electric bicycle that has a frame geometry with improved rigidity and allows for an aesthetically pleasing accommodation of the drive battery.

## Claims

1. Electric bicycle with a central motor, comprising
a) a frame (100) comprising a down tube (120), a seat tube (112) and a frame section (150) linking the down tube (120) and the seat tube (112), the frame (100) featuring an opening delimited inter alia by the down tube (120), the seat tube (112) and the frame section (150);
b) a drive unit (200) including the motor and a bottom bracket for accommodating a crank;
wherein
- the drive unit (200) is accommodated in the opening of the frame (100), adjacent to the frame section (150);
- a drive battery (250) is accommodated in the down tube (120); and
- the down tube (120) comprises an access opening (121) at an end of the down tube (120), arranged in such a way that the drive battery (250) is removable from the down tube (120) along a straight removal path (251) of the battery (250);
wherein the frame section (150) includes a U-shaped profile, a base of the profile being on the far side of the drive unit (200), the frame section (150) comprising lateral skirts (151) extending from a front part (152) of the frame section (150) at a connection of the frame section (150) with the down tube (120) to a rear part (154) of the frame section (150),
**characterized in that** a base plate (160) extends from an inner surface of the connection of the frame section (150) with the down tube (120) to an outer surface of the frame section (150) in a central region (153) of the frame section (150), the lateral skirts (151) being situated below the base plate (160) at the front region (152), delimiting an insertion and removal path (251) for the battery (250), and above the base plate (160) in the rear part (154) of the frame section (150), forming an accommodation for the drive unit (200), together with an inside surface of the base plate (160), wherein the lateral skirts (151) extend to both sides of the base plate (160) in the central region (153) of the frame section (150).

2. Electric bicycle as recited in claim 1, **characterized in that** the access opening (121) is arranged at a rear end of the down tube (120), the straight removal path (251) of the battery (250) running below the frame section (150) linking the down tube (120) and the seat tube (115).

3. Electric bicycle as recited in any of claims 1 or 2, **characterized in that** the frame section (150) is mechanically supporting the drive unit (200).

4. Electric bicycle as recited in any of claims 1 to 3, **characterized in that** the drive unit (200) is mounted to the frame (100) using a plurality of connections, at least one of them comprising a mounting bracket (180; 180.1, 180.2) featuring an L-shaped section, wherein a first connection site (182.1, 182.2) for affixing the bracket (180; 180.1, 180.2) to the drive unit (200) is arranged in a first leg of the L-shaped section and wherein a second connection site (181.1, 181.2) for affixing the bracket (180; 180.1, 180.2) to the frame (100) is arranged in a second leg of the L-shaped section.

5. Electric bicycle as recited in claim 4, **characterized in that** the first leg of the L-shaped section runs substantially parallel to a main plane of the bicycle frame (100) and that the second leg of the L-shaped section runs substantially parallel to the main plane of the bicycle frame (100).

6. Electric bicycle as recited in claims 1, 3 and 5, **characterized in that** the second leg of the L-shaped section is affixed to the base plate (160).

7. Electric bicycle as recited in any of claims 1 to 6, **characterized in that** a ratio between a vertical extension of the drive unit (200) and a horizontal extension of the drive unit (200) in the main plane of the bicycle is at least 1.2.

8. Electric bicycle as recited in any of claims 1 to 7, **characterized in that** cables running from a front part of the bicycle to a back part of the bicycle are arranged between the frame section (150) and the drive unit (200).

9. Electric bicycle as recited in any of claims 1 to 8, **characterized by** at least one strut (191; 192) extending from the down tube (120) to the seat tube (115) and/or a top tube (110) of the frame (100).

10. Electric bicycle as recited in any of claims 1 to 9, **characterized in that** a top tube (110) of the frame comprises two angled portions (111, 112), a rear portion constituting the seat tube (112)of the frame (100) and **in that** an additional saddle tube (115) is mounted to the rear portion.

11. Electric bicycle as recited in claim 10, **characterized in that** an angle between a main extension of the rear portion (112) and a main extension of the down tube (120) is less than 20°, in particular less than 10°.

12. Method for assembling an electric bicycle with a central motor according to any of claims 1 to 11, comprising the steps of:
a) introducing the drive unit (200) including the motor and the bottom bracket for accommodating a crank in an opening of the frame (100) ;
b) moving the drive unit (200) in an end position, toward the frame section (150);
c) mounting the drive unit (200) to the frame (100);
d) introducing the drive battery (250) into the down tube (120), through the access opening (121) at an end of the down tube, along a straight path (251).

## Patentansprüche

1. Elektrofahrrad mit einem Zentralmotor, umfassend
a) einen Rahmen (100), umfassend ein Unterrohr (120), ein Sitzrohr (112) und einen Rahmenabschnitt (150), der das Unterrohr (120) und das Sitzrohr (112) verbindet, wobei der Rahmen (100) eine Öffnung aufweist, die unter anderem durch das Unterrohr (120), das Sitzrohr (112) und den Rahmenabschnitt (150) begrenzt ist;
b) eine Antriebseinheit (200), die den Motor und ein Tretlager zur Aufnahme einer Kurbel umfasst;
wobei
- die Antriebseinheit (200) in der Öffnung des Rahmens (100) neben dem Rahmenabschnitt (150) aufgenommen ist;
- eine Antriebsbatterie (250) in dem Unterrohr (120) aufgenommen ist; und
- das Unterrohr (120) eine Zugangsöffnung (121) an einem Ende des Unterrohrs (120) umfasst, die derart angeordnet ist, dass die Antriebsbatterie (250) entlang eines geraden Entnahmewegs (251) der Batterie (250) aus dem Unterrohr (120) entnehmbar ist;
wobei der Rahmenabschnitt (150) ein U-förmiges Profil umfasst, wobei sich eine Basis des Profils auf der der Antriebseinheit (200) entgegengesetzten Seite befindet, wobei der Rahmenabschnitt (150) seitliche Schürzen (151) umfasst, die sich von einem vorderen Teil (152) des Rahmenabschnitts (150) an einer Verbindung des Rahmenabschnitts (150) mit dem Unterrohr (120) zu einem hinteren Teil (154) des Rahmenabschnitts (150) erstrecken,
**dadurch gekennzeichnet, dass** sich eine Basisplatte (160) von der Verbindung des Rahmenabschnitts (150) mit dem Unterrohr (120) von einer Innenfläche der Verbindung zu einer Außenfläche des Rahmenabschnitts (150) in einem zentralen Bereich (153) des Rahmenabschnitts (150) erstreckt, wobei sich die seitlichen Schürzen (151) im vorderen Bereich (152) unterhalb der Basisplatte (160) befinden, um einen Einführ- und Entnahmeweg (251) für die Batterie (250) abzugrenzen, und sich im hinteren Teil (154) des Rahmenabschnitts (150) oberhalb der Basisplatte (160) befinden, um zusammen mit einer Innenfläche der Basisplatte (160) eine Aufnahme für die Antriebseinheit (200) zu bilden, wobei sich die seitlichen Schürzen (151) im zentralen Bereich (153) des Rahmenabschnitts (150) beidseits der Basisplatte (160) erstrecken.

2. Elektrofahrrad nach Anspruch 1, **dadurch gekennzeichnet, dass** die Zugangsöffnung (121) an einem hinteren Ende des Unterrohrs (120) angeordnet ist, wobei der gerade Entnahmeweg (251) der Batterie (250) sich unterhalb des Rahmenabschnitts (150) befindet, der das Unterrohr (120) und das Sitzrohr (115) verbindet.

3. Elektrofahrrad nach einem der Ansprüche 1 oder 2, **dadurch gekennzeichnet, dass** der Rahmenabschnitt (150) die Antriebseinheit (200) mechanisch trägt.

4. Elektrofahrrad nach einem der Ansprüche 1 bis 3, **dadurch gekennzeichnet, dass** die Antriebseinheit (200) unter Verwendung mehrerer Verbindungen am Rahmen (100) befestigt ist, wobei mindestens eine Verbindung eine Montagehalterung (180; 180.1, 180.2) umfasst, welche einen L-förmigen Abschnitt aufweist, wobei eine erste Verbindungsstelle (182.1, 182.2) zum Befestigen der Montagehalterung (180; 180.1, 180.2) an der Antriebseinheit (200) in einem ersten Schenkel des L-förmigen Abschnitts angeordnet ist und wobei eine zweite Verbindungsstelle (181.1, 181.2) zum Befestigen der Montagehalterung (180; 180.1, 180.2) am Rahmen (100) in einem zweiten Schenkel des L-förmigen Abschnitts angeordnet ist.

5. Elektrofahrrad nach Anspruch 4, **dadurch gekennzeichnet, dass** der erste Schenkel des L-förmigen Abschnitts im Wesentlichen parallel zu einer Hauptebene des Fahrradrahmens (100) verläuft und dass der zweite Schenkel des L-förmigen Abschnitts im Wesentlichen parallel zur Hauptebene des Fahrradrahmens (100) verläuft.

6. Elektrofahrrad nach Anspruch 1, 3 und 5, **dadurch gekennzeichnet, dass** der zweite Schenkel des L-förmigen Abschnitts an der Basisplatte (160) befestigt ist.

7. Elektrofahrrad nach einem der Ansprüche 1 bis 6, **dadurch gekennzeichnet, dass** ein Verhältnis zwischen einer vertikalen Erstreckung der Antriebseinheit (200) und einer horizontalen Erstreckung der Antriebseinheit (200) in der Hauptebene des Fahrrads mindestens 1,2 beträgt.

8. Elektrofahrrad nach einem der Ansprüche 1 bis 7, **dadurch gekennzeichnet, dass** Kabel, die von einem vorderen Teil des Fahrrads zu einem hinteren Teil des Fahrrads verlaufen, zwischen dem Rahmenabschnitt (150) und der Antriebseinheit (200) angeordnet sind.

9. Elektrofahrrad nach einem der Ansprüche 1 bis 8, **gekennzeichnet durch** mindestens eine Strebe (191; 192), die sich vom Unterrohr (120) zum Sitzrohr (115) und/oder einem Oberrohr (110) des Rahmens (100) erstreckt.

10. Elektrofahrrad nach einem der Ansprüche 1 bis 9, **dadurch gekennzeichnet, dass** ein Oberrohr (110) des Rahmens zwei abgewinkelte Abschnitte (111, 112) umfasst, wobei ein hinterer Abschnitt das Sitzrohr (112) des Rahmens (100) bildet, und dass ein zusätzliches Sattelrohr (115) am hinteren Abschnitt befestigt ist.

11. Elektrofahrrad nach Anspruch 10, **dadurch gekennzeichnet, dass** ein Winkel zwischen einer Haupterstreckung des hinteren Abschnitts (112) und einer Haupterstreckung des Unterrohrs (120) weniger als 20°, insbesondere weniger als 10° beträgt.

12. Verfahren zur Montage eines Elektrofahrrads mit einem Zentralmotor nach einem der Ansprüche 1 bis 11, umfassend die Schritte:
a) Einführen der Antriebseinheit (200), die den Motor und das Tretlager zur Aufnahme einer Kurbel umfasst, in eine Öffnung des Rahmens (100);
b) Bewegen der Antriebseinheit (200) in Richtung des Rahmenabschnitts (150) in eine Endposition;
c) Befestigen der Antriebseinheit (200) am Rahmen (100);
d) Einführen der Antriebsbatterie (250) in das Unterrohr (120) durch die Zugangsöffnung (121) an einem Ende des Unterrohrs entlang eines geraden Wegs (251).

## Revendications

1. Vélo électrique à moteur central, comprenant :
a) un cadre (100) comprenant un tube diagonal (120), un tube de selle (112) et une section de cadre (150) reliant le tube diagonal (120) et le tube de selle (112), le cadre (100) présentant une ouverture délimitée notamment par le tube diagonal (120), le tube de selle (112) et la section de cadre (150) ;
b) un groupe motopropulseur (200) comprenant le moteur et un boîtier de pédalier pour recevoir un pédalier ;
dans lequel :
- le groupe motopropulseur (200) est renfermé dans l'ouverture du cadre (100), à proximité de la section de cadre (150) ;
- une batterie d'entraînement (250) est renfermée dans le tube diagonal (120) ; et
- le tube diagonal (120) comporte une ouverture d'accès (121) à une extrémité du tube diagonal (120), agencée de manière à permettre le retrait de la batterie d'entraînement (250) du tube diagonal (120) le long d'un passage de retrait rectiligne (251) de la batterie (250) ;
dans lequel la section de cadre (150) comprend un profil en U, une base du profil étant située du côté opposé à l'unité d'entraînement (200), la section de cadre (150) comprenant des jupes latérales (151) s'étendant d'une partie avant (152) de la section de cadre (150), au niveau de la jonction de la section de cadre (150) avec le tube diagonal (120), jusqu'à une partie arrière (154) de la section de cadre (150),
**caractérisé en ce qu'**une plaque de base (160) s'étend d'une surface intérieure de la jonction de la section de cadre (150) avec le tube diagonal (120) jusqu'à une surface extérieure de la section de cadre (150) dans une zone centrale (153) de la section de cadre (150), les jupes latérales (151) étant situées au-dessous la plaque de base (160) au niveau de la zone avant (152), délimitant un passage d'insertion et de retrait (251) pour la batterie (250) et au-dessus de la plaque de base (160) dans la partie arrière (154) de la section de cadre (150), formant un logement pour le groupe motopropulseur (200), conjointement à une surface intérieure de la plaque de base (160), dans lequel les jupes latérales (151) s'étendent des deux côtés de la plaque de base (160) dans la zone centrale (153) de la section de cadre (150).

2. Vélo électrique selon la revendication 1, **caractérisé en ce que** l'ouverture d'accès (121) est située à l'extrémité arrière du tube diagonal (120), le passage de retrait rectiligne (251) de la batterie (250) passant sous la section de cadre (150) reliant le tube diagonal (120) et le tube de selle (115).

3. Vélo électrique selon une quelconque des revendications 1 ou 2, **caractérisé en ce que** la section de cadre (150) supporte mécaniquement le groupe motopropulseur (200).

4. Vélo électrique selon une quelconque des revendications 1 à 3, **caractérisé en ce que** le groupe motopropulseur (200) est fixé au cadre (100) au moyen d'une pluralité de fixations, dont au moins une comprend un support de montage (180 ; 180.1, 180.2) présentant une section en L, dans lequel un premier site de fixation (182.1, 182.2) destiné à fixer le support (180 ; 180.1, 180.2) au système d'entrainement (200) est disposé dans une première branche de la section en L et dans lequel un deuxième site de fixation (181.1, 181.2) destiné à fixer le support (180 ; 180.1, 180.2) au cadre (100) st disposé dans une deuxième branche de la section en L.

5. Vélo électrique selon la revendication 4, **caractérisé en ce que** le premier côté de la section en L s'étend sensiblement parallèlement au plan principal du cadre dé vélo (100) et que le deuxième côté de la section en L s'étend sensiblement parallèlement au plan principal du cadre de vélo (100).

6. Vélo électrique selon les revendications 1, 3 et 5, **caractérisé en ce que** le deuxième côté de la section en L est fixé à la plaque de base (160).

7. Vélo électrique selon une quelconque des revendications 1 à 6, **caractérisé en ce qu'**un rapport entre le prolongement vertical du groupe motopropulseur (200) et un prolongement horizontal du groupe motopropulseur (200) dans le plan principal du vélo est d'au moins 1,2.

8. Vélo électrique selon une quelconque des revendications 1 à 7, **caractérisé en ce que** les câbles reliant une partie avant du vélo à une partie arrière du vélo sont disposés entre la section de cadre (150) et le groupe motopropulseur (200).

9. Vélo électrique selon une quelconque des revendications 1 à 8, **caractérisé par** au moins une entretoise (191 ; 192) s'étendant du tube diagonal (120) au tube de selle (115) et/ou à un tube supérieur (110) du cadre (100).

10. Vélo électrique selon une quelconque des revendications 1 à 9, **caractérisé en ce qu'**un tube supérieur (110) du cadre comprend deux parties angulaires (111, 112), une partie arrière constituant le tube de selle (112) du cadre (100) et **en ce qu'**un tube de selle supplémentaire (115) est fixé à la partie arrière.

11. Vélo électrique selon la revendication 10, **caractérisé en ce qu'**un angle entre une extension principale de la partie arrière (112) et une extension principale du tube diagonal (120) est inférieur à 20°, et notamment inférieur à 10°.

12. Procédé d'assemblage d'un vélo électrique à moteur central selon une quelconque des revendications 1 à 11, comprenant les étapes de :
a) introduction du groupe motopropulseur (200) comprenant le moteur et le boîtier de pédalier pour recevoir un pédalier dans une ouverture du cadre (100) ;
b) déplacement du groupe motopropulseur (200) vers une position finale, dans la direction de la section de cadre (150) ;
c) fixation du groupe motopropulseur (200) au cadre (100) ;
d) introduction du groupe motopropulseur (250) dans le tube diagonal (120), à travers l'ouverture d'accès (121) à une extrémité du tube diagonal, le long d'un passage rectiligne (251).
